Europäisches Patentamt

European Patent Office

Office européen des brevets

(11) Publication number: **0 426 171 A2**

# EUROPEAN PATENT APPLICATION

(21) Application number: 90120940.3

(22) Date of filing: 31.10.90

(51) Int. Cl.5: **G01L 1/18**

(30) Priority: 01.11.89 JP 282896/89

(43) Date of publication of application:
08.05.91 Bulletin 91/19

(84) Designated Contracting States:
**DE FR GB NL**

(71) Applicant: **Matsushita Electronics Corporation**
**1006, Oaza-Kadoma Kadoma-shi**
**Osaka 571(JP)**

(72) Inventor: **Kaneko, Tadataka**

3-31-8, Gein
Minoo-shi, Osaka(JP)
Inventor: **Tsuda, Naoyuki**
6-14-7, Shimosakamoto
Ohtsu-shi, Shiga-ken(JP)
Inventor: **Yamaguchi, Tsuneo**
131-51, Ise-cho
Moriyama-shi, Shiga-ken(JP)

(74) Representative: **Dipl.-Ing. Schwabe, Dr. Dr.**
**Sandmair, Dr. Marx**
**Stuntzstrasse 16**
**W-8000 München 80(DE)**

(54) Semiconductor pressing force sensor.

(57) A semiconductor pressing force sensor comprising a diaphragm formed of a semiconductor single-crystal base, a thin film portion formed centrally in the diaphragm, a bridge circuit consisting of a plurality of gauge resistances formed on a first surface of the thin film portion, and a contactor operative to transmit the force to be measured onto a second surface of the thin film portion, whereby a force is directly measured without presence of fluid being required.

Fig. 1

EP 0 426 171 A2

## SEMICONDUCTOR PRESSING FORCE SENSOR

### BACKGROUND OF THE INVENTION

1. Field of the invention:

This invention relates to a semiconductor pressing force sensor for measuring mechanical forces such as weight, pressing force, and tensile force.

2. Description of the prior art:

Conventionally, spring scales, platform balances and the like are employed for measurement of weight, pressing force, tensile force, etc. Pressure gages are employed for measurement of liquid pressure, gas pressure, etc. The aneroid barometer, as one of such gages, has long been known. These known devices for measuring weight etc., and those for pressure measurement have been of the mechanically constructed type.

Recently, with the development of semiconductor pressure sensors, considerable progress has been seen in size reduction and application of electronic circuits with respect to various measuring devices. Indeed, these semiconductor pressure sensors have been increasingly employed not only for pressure measuring, but also for purposes of system control.

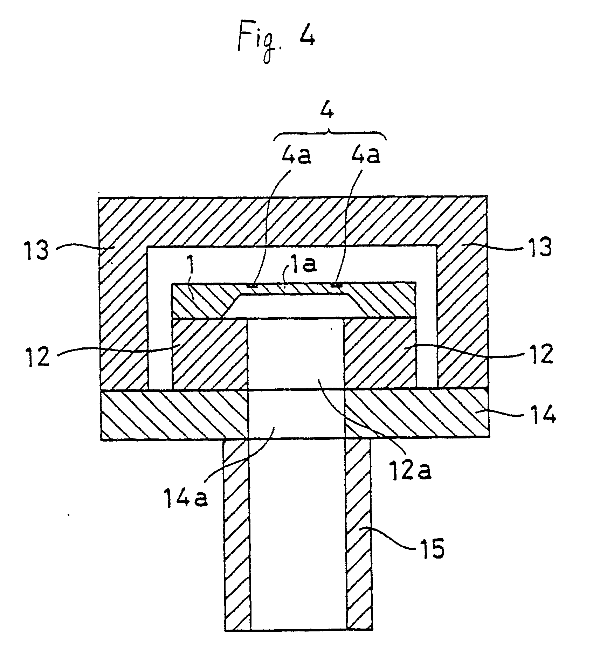

Figure 4 shows a sectional view of a prior art semiconductor pressure sensor. The semiconductor pressure sensor includes a diaphragm **1** comprising a silicon semiconductor single-crystal base. A central region of the diaphragm **1** on one side has been removed by etching or some other suitable means, with a thin film portion **1a** formed therein which comprises a very thin silicon film. On the other side of the diaphragm **1** there are formed diffusion-type gauge resistances **4a**, **4b** which constitute a bridge circuit 4.

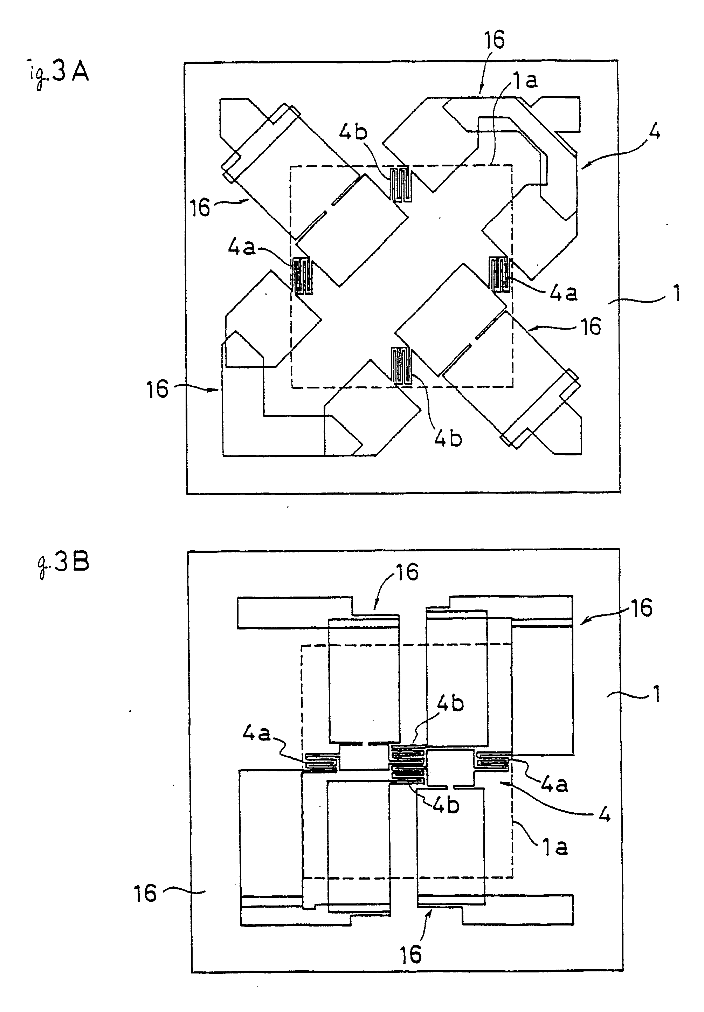

The diaphragm 1 has such a configuration as shown in plan in Figure 3A or 3B. Figure 3A shows a diaphragm as viewed in the case where the bridge circuit 4 is formed on the (100) surface of the silicon semiconductor single-crystal base. In Figure 3A, the distance between the opposed gauge resistances **4a** and **4a** and that between the gauge resistances **4b** and **4b** are established to be equal. The diffusion resistances **4a**, **4b** are interconnected by wiring patterns **16**, **16** ... to form the bridge circuit **4**.

Figure 3B shows a diaphragm as viewed in the case where the bridge circuit 4 is formed on the (110) surface of the silicon semiconductor single-crystal base. In Figure 3B, the opposed gauge resistances **4b** and **4b** are disposed in proximity to each other.

As Figure **4** shows, the diaphragm **1** is fixedly bonded on a pedestal **12** formed of silicon or Pyrex glass or a like material. The pedestal **12** and the diaphragm **1** are assembled in plastic- or metal-made packages **13** and **14**. The pedestal **12** and the package **14** are formed with openings **12a** and **14a** respectively. An introduction pipe **15** is mounted in position for communication with the openings **12a** and **14a**.

In this semiconductor pressure sensor, fluids such as gas and liquid, which are objects for measurement, are introduced inward through the introduction pipe **15**. The fluid introduced comes into contact with the thin film portion **1a** of the diaphragm **1** via the openings **12a** and **14a**, thus applying pressure to the thin film portion **1a**. When subjected to pressure, the thin film portion **1a** is deformed and tends to deflect toward the lower pressure side. As a result of this deflection, a stress occurs and the resistance value of the diffusion gauge resistance **4a** suffers a change under the piezoresistive effect, so that the bridge circuit **4** goes out of balance, whereupon an output voltage is generated. On the basis of this output voltage, measurement is effected with respect to the pressure of the object under measurement.

In this way, the known semiconductor pressure sensor can measure the pressure of fluids such as gas and liquid. However, the semiconductor pressure sensor has a drawback in that it is not capable of directly measuring mechanical forces, such as weight, pressing force and tensile force. In order to measure such mechanical forces employing the semiconductor pressure sensor, it is necessary to use a converter unit which converts a mechanical force into pressure by using a fluid. However, when such a converter unit is mounted to the semiconductor pressure sensor, the apparatus as a whole becomes considerably large in size, weight, etc. Another problem is that the temperature characteristics of the semiconductor pressure sensor are adversely affected by thermal expansion of the fluid (e.g., silicone oil). A further problem is that linearity is adversely affected by changes in characteristics in a metal diaphragm included in the converter unit, with the result that abnormal deterioration will occur in measurement accuracy.

### SUMMARY OF THE INVENTION

The semiconductor pressing force sensor of this invention, which overcomes the above-discussed and numerous other disadvantages and deficiencies of the prior art, comprises a diaphragm formed of a semiconductor single-crystal base, a thin film portion formed centrally in the diaphragm, a bridge circuit consisting of a plurality of gauge resistances formed on a first surface of the thin film portion, and a contactor operative to transmit the force to be measured onto a second surface of the thin film portion.

The semiconductor pressing force sensor of one embodiment of this invention comprises a diaphragm formed of a semiconductor single-crystal base, a thin film portion formed centrally in the diaphragm, a bridge circuit consisting of a plurality of gauge resistances formed on a first surface of the thin film portion, a contactor operative to transmit the force to be measured onto a second surface of the thin film portion, a package which houses the diaphragm therein and has an opening for guiding the contactor, and a pedestal serving to enable the diaphragm to be fixedly bonded in the package and having an opening for guiding the contactor, the diameter of the opening of the pedestal being larger than the diameter of the opening of the package.

In a preferred embodiment, both said package and said contactor are formed of a polyphenylene sul fide (PPS) resin.

In a preferred embodiment, said first surface of said thin film portion is the (100) surface of said semiconductor single-crystal base.

In a preferred embodiment, a protrusion is formed on said second surface of said thin film portion.

The semiconductor pressing force sensor of one embodiment of this invention comprises a diaphragm formed of a semiconductor single-crystal base, a thin film portion formed centrally in the diaphragm, a bridge circuit consisting of a plurality of gauge resistances formed on a first surface of the thin film portion, and a contactor operative to transmit the force to be measured onto a second surface of the thin film portion, said first surface of the thin film portion being the (100) surface of the semiconductor single-crystal base.

In a preferred embodiment, a protrusion is formed on said second surface of said thin film portion.

The semiconductor pressing force sensor of one embodiment of this invention comprises a diaphragm formed of a semiconductor single-crystal base, a thin film portion formed centrally in the diaphragm, a bridge circuit consisting of a plurality of gauge resistances formed on a first surface of the thin film portion, a contactor which contacts a second surface of the thin film portion and transmits the force to be measured to the thin film portion, and a protrusion formed on the second surface of the thin film portion.

Thus, the invention described herein makes possible the object of providing a semiconductor pressing force sensor which can directly measure mechanical forces, and which is simple in construction and requires no presence of fluid therein.

According to the arrangement of the semiconductor pressing force sensor of the invention, a pressing force is directly transmitted to a diaphragm through a contactor, without presence of fluid being required. The force transmitted to the diaphragm, through its piezoresistive effect, generates a voltage in a bridge circuit formed in the diaphragm. Pressing force measurement can be effected with high accuracy by using this voltage.

## BRIEF DESCRIPTION OF THE DRAWINGS

This invention may be better understood and its numerous objects and advantages will become apparent to those skilled in the art by reference to the accompanying drawings as follows:

Figure 1 is a sectional view showing one example of the semiconductor pressing force sensor according to the invention;

Figure 2 is a sectional view showing another example of the semiconductor pressing force sensor of the invention;

Figure 3A is a plan view showing a diaphragm formed of a silicon semiconductor single-crystal base wherein a bridge circuit is formed on the (100) surface of the base;

Figure 3B is a plan view showing a diaphragm formed on a silicon semiconductor single-crystal base wherein the bridge circuit is formed on the (110) surface of the base; and

Figure 4 is a sectional view of a prior art semiconductor pressure sensor.

## DESCRIPTION OF THE PREFERRED EMBODIMENTS

### Example 1

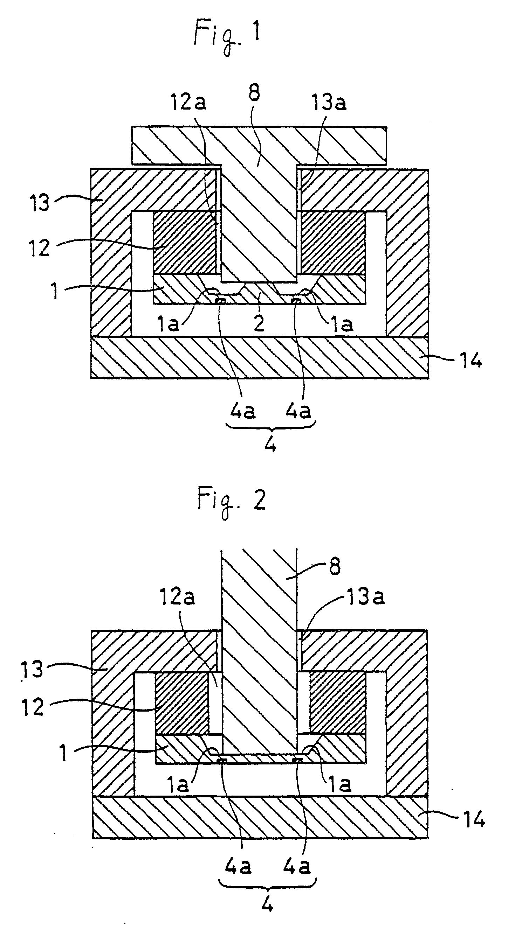

One example of the semiconductor pressing force sensor according to the invention is illustrated in Figure 1. The semiconductor pressing force sensor of the invention comprises a diaphragm **1** formed of a silicon semiconductor single-crystal base, a thin film portion **1a** formed centrally in the diaphragm **1**, a bridge circuit **4** consisting of a plurality of gauge resistances 4a, 4a, 4b and 4b - (Figure 3A) formed on a first surface of the thin film portion 1a, and a contactor 8 which contacts a second surface of the thin film portion 1a and transmits the force to be measured to the thin film portion 1a.

The thin film portion 1a is formed by removing a central portion of one surface of the diaphragm 1 by etching or other suitable means and comprises a very thin silicon film. Diffusion-type gauge resistances 4a, 4b are formed on the first surface of the thin film portion 1a. These diffusion-type gauge resistances 4a and 4b constitute a bridge circuit 4 of a known type. The bridge circuit 4 is formed on the (100) surface of the silicon single-crystal base and has such a configuration as shown in plan in Figure 3A, as already referred to. The distance between the opposed gauge resistances 4a and 4a and the distance between the gauge resistances 4b and 4b are established to be equal. A protrusion 2 is centrally formed on the second surface of the thin film portion 1a.

As Figure 1 shows, the diaphragm 1 is fixedly bonded on a pedestal 12. In order to prevent any offset voltage rise in the bridge circuit 4, the pedestal 12 is constructed of a material having an expansion coefficient which is close to the expansion coefficient of the material of the diaphragm 1, for example, silicon, pyrex glass or a like material. Both the pedestal 12 and the diaphragm 1 are assembled in plastic or metal-made packages 13 and 14.

The pedestal 12 and the package 13 are formed respectively with openings 12a and 13a in which is received a plastic-made contactor 8 having a T-shaped sectional configuration. The contactor 8 is guided by the package 13 and pedestal 12, the lower end of the contactor 8 being in contact with the above-mentioned protrusion 2.

In the present example, the external force to be measured is transmitted through the contactor 8 to the protrusion 2 of the diaphragm 1. The thin film portion 1a of the diaphragm 1 is deformed by the transmitted force and thus a stress is produced in the diaphragm 1, so that the bridge circuit 4 goes out of balance under the resulting piezoresistive effect, an output voltage being thus generated. Forces such as weight, pressing force and tensile force, are measured on the basis of this output voltage.

In the present example, the diaphragm 1 has a size of 3.5 mm x 3.5 mm, and a thickness of 70 $\mu$m in its thin film portion 1a and a thickness of 290 $\mu$m in its portion other than the thin film portion 1a and in the protrusion 2. With a semiconductor pressing force sensor having such size and layer thickness, it is possible to measure forces within a weight range of 0 to 100 g, with a tolerance of about 2% (typ.) relative to full scale. The measurement range can be set as desired by suitably selecting the thickness of the diaphragm 1 and the thin film portion 1a, configuration and size of the diffusion-type gauge resistances 4a, 4b and so forth.

In this example, the thin film portion 1a of the diaphragm 1 is provided with a protrusion 2; therefore, even if some positional deviation occurs with the contactor 8 in the opening 13a of the package 13 and/or in the opening 12a of the pedestal 12, the force applied to the contactor 8 is accurately transmitted to the thin film portion 1a of the diaphragm 1. Again, in the present example, the bridge circuit 4 is formed on the (100) surface of the semiconductor single-crystal base and, as Figure 3A shows, the distance between the opposed gauge resistances 4a and 4a and that between the gauge resistances 4b and 4b are set equal. By virtue of such a plan-view configuration of the circuit bridge 4, there is no possibility of the contactor 8 directly pushing the back side of the gauge resistances 4b, 4b as in the case where such a plan-view configuration as shown in Figure 3B is adopted, and therefore the linearity of the output voltage is maintained even when any positional deviation occurs with the contactor 8.

Example 2

Another embodiment of the invention is shown in section in Figure 2. In the foregoing Figure 1 example, there may be cases where as a result of friction between the respective openings 12a and 13a of the pedestal 12 and package 13, as one part, and the contactor 8, as the other part, the force to be measured which is applied to the contactor 8 may not be accurately transmitted to the diaphragm 1. The present example solves this problem.

The construction of the semiconductor pressing force sensor in this example is identical with that in the Figure 1 example, except that the diameter of the opening 12a of the pedestal 12 is larger than that of the opening 13a of the package 13, that the contactor 8 is rod-shaped and that no protrusion 2 is provided in the thin film portion 1a. In the present example, both the package 13 and the contactor 8 are formed of a plastic material having a low friction coefficient, for example, PPS (polyphenylene sulfide) resin.

In this example, the diameter of the opening 12a of the pedestal 12 is larger than that of the opening 13a of the package 13. Therefore, the contactor 8 does not contact the opening 12a of the pedestal 12 and the contact area of the side portions of the contactor 8 is reduced. Because of the fact that both the package 13 and the contactor 8 are constructed of a PPS (polyphenylene sulfide) resin having a low friction coefficient, the friction between the opening 13a of the package 13 and the contactor 8 is reduced, so that the force to be measured which is applied to the contactor 8 is accurately transmitted to the diaphragm 1.

In the foregoing Examples 1 or 2, the contactor 8 and the protrusion 2 or the thin film portion 1a of the diaphragm 1 are not in adhesion bond. Alternatively, however, these elements may be bonded together by resin or otherwise. Where the contactor 8 and the protrusion 2 or the thin film portion 1a are bonded together, it is possible to perform direct measurement of tensile force.

It is understood that various other modifications will be apparent to and can be readily made by those skilled in the art without departing from the scope and spirit of this invention. Accordingly, it is not intended that the scope of the claims appended hereto be limited to the description as set forth herein, but rather that the claims be construed as encompassing all the features of patentable novelty that reside in the present invention, including all features that would be treated as equivalents thereof by those skilled in the art to which this invention pertains.

## Claims

1. A semiconductor pressing force sensor comprising a diaphragm formed of a semiconductor single-crystal base, a thin film portion formed centrally in the diaphragm, a bridge circuit consisting of a plurality of gauge resistances formed on a first surface of the thin film portion, and a contactor operative to transmit the force to be measured onto a second surface of the thin film portion.

2. A semiconductor pressing force sensor comprising a diaphragm formed of a semiconductor single-crystal base, a thin film portion formed centrally in the diaphragm, a bridge circuit consisting of a plurality of gauge resistances formed on a first surface of the thin film portion, a contactor operative to transmit the force to be measured onto a second surface of the thin film portion, a package which houses the diaphragm therein and has an opening for guiding the contactor, and a pedestal serving to enable the diaphragm to be fixedly bonded in the package and having an opening for guiding the contactor, the diameter of the opening of the pedestal being larger than the diameter of the opening of the package.

3. A semiconductor pressing force sensor according to claim 2, wherein both said package and said contactor are formed of a polyphenylene sulfide resin.

4. A semiconductor pressing force sensor according to claim 2, wherein said first surface of said thin film portion is the (100) surface of said semiconductor single-crystal base.

5. A semiconductor pressing force sensor according to claim 3, wherein said first surface of said thin film portion is the (100) surface of said semiconductor single-crystal base.

6. A semiconductor pressing force sensor according to claim 2, wherein a protrusion is formed on said second surface of said thin film portion.

7. A semiconductor pressing force sensor according to claim 3, wherein a protrusion is formed on said second surface of said thin film portion.

8. A semiconductor pressing force sensor according to claim 4, wherein a protrusion is formed on said second surface of said thin film portion.

9. A semiconductor pressing force sensor according to claim 5, wherein a protrusion is formed on said second surface of said thin film portion.

10. A semiconductor pressing force sensor comprising a diaphragm formed of a semiconductor single-crystal base, a thin film portion formed centrally in the diaphragm, a bridge circuit consisting of a plurality of gauge resistances formed on a first surface of the thin film portion, and a contactor operative to transmit the force to be measured onto a second surface of the thin film portion, said first surface of the thin film portion being the (100) surface of the semiconductor single-crystal base.

11. A semiconductor pressing force sensor according to claim 10, wherein a protrusion is formed on said second surface of said thin film portion.

12. A semiconductor pressing force sensor comprising a diaphragm formed of a semiconductor single-crystal base, a thin film portion formed centrally in the diaphragm, a bridge circuit consisting of a plurality of gauge resistances formed on a first surface of the thin film portion, a contactor which contacts a second surface of the thin film portion and transmits the force to be measured to the thin film portion, and a protrusion formed on the second surface of the thin film portion.

Fig. 1

Fig. 2

Fig. 3 A

Fig. 3 B

Fig. 4